# EUROPEAN PATENT APPLICATION

(11) **EP 4 704 183 A1**
(43) Date of publication of application: **04.03.2026**
(21) Application number: 24796903.3
(22) Date of filing: 18.04.2024
(51) Int. Cl.: H01M 4/505, H01M 4/525

(54) **POSITIVE ELECTRODE ACTIVE MATERIAL FOR SECONDARY BATTERY, AND SECONDARY BATTERY**

(30) Priority: 28.04.2023 JP 2023074910
(71) Applicant: Panasonic Intellectual Property Management Co., Ltd., Kadoma-shi, Osaka 571-0057 (JP)
(72) Inventor: ZHANG, Jin, Kadoma-shi, Osaka 571-0057 (JP); SAITO, Motoharu, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2024/015360
(87) International publication number: WO 2024/225150

(57) **Abstract**

A positive electrode active material for secondary batteries contains a lithium-metal composite oxide having a rock salt type crystal structure assignable to the space group Fm-3m. The lithium-metal composite oxide contains at least Li and Mn and has a D50 of 0.05 µm or more and 10 µm or less in a volume-based cumulative particle size distribution of the lithium-metal composite oxide. A secondary battery includes the positive electrode active material in a positive electrode.

## Description

### [Technical Field]

The present disclosure relates to a positive electrode active material for secondary batteries and a secondary battery.

### [Background Art]

Secondary batteries, particularly a lithium-ion secondary battery, are expected as small consumer application, power storage devices, and power sources for electric vehicles, because of their high output and high energy density. As a positive electrode active material for the lithium-ion secondary battery, a composite oxide of lithium and a transition metal (e.g., cobalt) is used. By partial substitution of cobalt with nickel, the capacity can be increased.

Incidentally, a Li-excess lithium-metal composite oxide based on rock-salt structured Li₁₊xMn₁₋ₓO₂ has attracted attention in recent years in response to the demand for high energy density.

Patent Literature 1 discloses a positive electrode active material containing a lithium-transmission metal composite oxide having a crystal structure belonging to the space group Fm-3m and represented by the composition formula Li₁₊ₓNb_{y}Me_{z}AₚO₂ (Me represents a transition metal including either or both Fe and Me, 0 < x < 1, 0 < y < 0.5, 0.25 ≤ z < 1, A represents an element other than Nb and Me, and 0 ≤ p ≤ 0.2, wherein Li₁₊ₚFe_{1-q}Nb_{q}O₂ where 0.15 < p ≤ 0.3 and 0 < q ≤ 0.3 is excluded).

### [Citation List]

### [Patent Literature]

[Patent Literature 1]
Japanese Patent No. 6197029

### [Summary of Invention]

### [Technical Problem]

Patent Literature 1 achieves a high capacity through compositional control (i.e., addition of Nb). However, the capacity increasing effects are not sufficient, and there is still room for improvement.

### [Solution to Problem]

In view of the foregoing, an aspect of the present disclosure relates to a positive electrode active material for secondary batteries, including a lithium-metal composite oxide having a rock salt type crystal structure assignable to a space group Fm-3m, wherein the lithium-metal composite oxide contains at least Li and Mn, and the lithium-metal composite oxide has a D50 of 0.05 µm or more and 10 µm or less in a volume-based cumulative particle size distribution.

Another aspect of the present disclosure relates to a secondary battery, including a positive electrode; a negative electrode; an electrolyte; and a separator provided between the positive electrode and the negative electrode, wherein the positive electrode contains the above-described positive electrode active material for secondary batteries.

### [Advantageous Effects of Invention]

According to the present disclosure, a high-energy-density secondary battery can be realized.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a partial cutaway schematic perspective view of a secondary battery according to an embodiment of the present disclosure.
[FIG. 2] FIG. 2 is a graph representation showing the particle size distributions of lithium-metal composite oxides used in Examples 7 to 10 and Comparative Example 3.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

In the following description, the word "comprise" or "include" is an expression including meanings of "comprise (or include)", "essentially consist of", and "consist of".

Secondary batteries include at least lithium-ion batteries, nonaqueous electrolyte secondary batteries such as a lithium-metal secondary battery, and all-solid-state batteries using a solid-state electrolyte.

A positive electrode active material for secondary batteries according to an embodiment of the present disclosure contains a lithium-metal composite oxide (hereinafter, also referred to as "lithium-metal composite oxide (Fm)") having the rock salt type crystal structure assignable to the space group Fm-3m. The lithium-metal composite oxide (Fm) has a crystal structure based on the rock salt structure belonging to the space group Fm-3m and has a crystal structure similar to the rock salt structure typified, for example, by NaCl. Oxygen atoms are arranged in the anion sites of the crystalline structure such as above, and Li atoms and atoms of a metal other than Li can be arranged randomly in the cation sites.

The lithium-metal composite oxide (Fm) contains at least Li and Mn. The lithium-metal composite oxide (Fm) based on rock-salt structured Li₁₊ₓMn₁₋ₓO₂ is expected to exhibit a high capacity.

At present, examples have been reported in which several lithium-metal composite oxides (Fm) were synthesized by applying high shear force to a mixed raw material using a stirrer such as a ball mill at a laboratory level. The mixed raw material contains a lithium compound and a manganese compound.

Incidentally, in mass production of the lithium-metal composite oxide (Fm), efficient synthesis by sintering the mixed raw material is required. Particles of a lithium-metal composite oxide (Fm) synthesized by sintering usually have a very high hardness and are in lumps.

Furthermore, a lithium-metal composite oxide (Fm) synthesized using a ball mill tends to have a small particle diameter. Accordingly, the surface area contributing to the electrode reaction in the positive electrode active material is large, and the side reaction is also large. As a result, cycle characteristics are likely to degrade when it is used as the positive electrode active material of a secondary battery. From the viewpoint of suppressing the degradation of the cycle characteristics, the average particle diameter (which means the median diameter D50 in the volume-based cumulative particle size distribution) of the lithium-metal composite oxide (Fm) is preferably 0.05 µm or more or 0.1 µm or more, but it is difficult to control the particle diameter within the above-described range in the synthesis using a ball mill.

Pulverization of the lithium-metal composite oxide (Fm) synthesized by sintering yields a lithium-metal composite oxide (Fm) having a desired particle size distribution and yields a lithium-metal composite oxide (Fm) having an average particle diameter D50 of 0.05 µm or more. Use of this lithium-metal composite oxide (Fm) as a positive electrode active material can realize a secondary battery with a high discharge capacity and cycle characteristics that degrade less.

In the positive electrode active material for secondary batteries according to an embodiment of the present disclosure, the D50 of the lithium-metal composite oxide (Fm) in the volume-based cumulative particle size distribution is 0.05 µm or more and 10 µm or less. The D50 in the particle size distribution can be controlled within the above range by pulverizing, under appropriate conditions, a lithium-metal composite oxide (Fm) with a high hardness obtained by sintering a mixed raw material. Increasing the D50 makes it easier to increase the electrode capacity. The D50 is 0.05 µm or more, preferably 0.1 µm or more, and more preferably 0.15 µm or more. The D50 may be 0.2 µm or more. The D50 is 10 µm or less, preferably 1 µm or less, and more preferably 0.8 µm or less, 0.6 µm or less, or 0.5 µm or less. The above upper and lower limits of the D50 can be arbitrarily combined.

Further, the D90 (particle diameter at which the cumulative volume from the smaller side reaches 90% of the total volume) in the volume-based cumulative particle size distribution of the lithium-metal composite oxide (Fm) is preferably 1 µm or more and 10 µm or less from the viewpoint that the electrode capacity can be more easily increased. The particle diameter D90 is preferably 1 µm or more, and more preferably 2 µm or more. The particle diameter D90 is preferably 10 µm or less, and more preferably 8 µm or less. The above upper and lower limits of the D90 can be arbitrarily combined.

For the measurement of the particle size distribution of the positive electrode active material for secondary batteries, a laser diffraction particle analyzer (e.g., "Mastersizer 3000" manufactured by Malvern Panalytical) is used. A positive electrode active material sample is dispersed in 4 mL of an aqueous solution of sodium hexametaphosphate. Sonication is performed for 1 minute for dispersion treatment. The entire sample is loaded into the analyzer for measurement. The concentration of the aqueous solution of sodium hexametaphosphate is set to 0.02 to 1% by mass.

In association with pulverization of the lithium-metal composite oxide (Fm) synthesized by sintering using a ball mill or the like, the peak in the volume-based particle size distribution shifts toward the small particle diameter side and splits, so that two peaks can be observed. As the time required for pulverization increases, the peak on the smaller particle diameter side becomes high and the peak on the larger particle diameter side becomes low.

The average particle diameter (median diameter D50 in a volume-based cumulative particle size distribution) of the lithium-metal composite oxide (Fm) can be measured, in a state in which the particles are incorporated into the positive electrode, by using particles of the lithium-metal composite oxide (Fm) observed in a cross-sectional image in the thickness direction of a positive electrode of a secondary battery captured by a scanning electron microscope (SEM) (hereinafter simply referred to as "cross-sectional SEM image"). The particles observed in the cross-sectional SEM image of the positive electrode may be cross sections of the particles. The average particle diameter D50 (and D90) can be determined from the cumulative particle size distribution of 100 or more particles (cross sections of particles) of the lithium-metal composite oxide (Fm) arbitrarily selected from the cross-sectional SEM image. The following describes an exemplary process of obtaining the average value of D50 from a cross-sectional SEM image.

### (1) Preparation of Cross Section of Positive Electrode

First, a positive electrode as a measurement target is prepared. Typically, the positive electrode includes a positive electrode current collector and a positive electrode active material layer formed on a surface of the positive electrode current collector. The positive electrode active material layer and the positive electrode current collector as above are simultaneously cut in the thickness direction of the positive electrode to form a cross section. At this time, the positive electrode active material layer may be filled with a thermosetting resin and cured. For example, a cross section sample of the positive electrode active material layer may be obtained by the cross-section polisher (CP) method or the focused ion beam (FIB) method, for example.

The positive electrode as the measurement target is taken out of a secondary battery at a depth of discharge (DOD) of 90% or more. The depth of discharge (DOD) is the proportion of the amount of electricity discharged to the amount of electricity that a battery in the fully charged state possesses. Note that the rated capacity corresponds to the amount of electricity charged (i.e., the full charge capacity) when a battery in the fully discharged state (DOD = 100%) is charged to be in the fully charged state (SOC = 100%, DOD = 0%). The voltage of a battery in the fully charged state corresponds to the end-of-charge voltage. The voltage of a battery in the fully discharged state corresponds to the end-of-discharge voltage.

### (2) Cross-Sectional SEM Image Capture

Next, the cross-sectional sample of the positive electrode (positive electrode active material layer) is observed using a SEM. Observation using a SEM is performed, for example, at a magnification of 500 times to 3000 times. The cross-sectional SEM image is captured so that an area having a length of 30 µm or more (preferably, 40 µm or more) in the plane direction of the positive electrode active material layers is observed.

### (3) Image analysis

The area is measured for each of the particles (cross sections of the particles), and the diameter Dd (Dd = 8√(Sd/π³)) of an equivalent sphere is determined from a measured area Sd, where Dd is a diameter of a sphere whose average cross-sectional area is equal to Sd. The cumulative particle size distribution of the diameters (Dd) is then determined. The volume-based particle size distribution is determined, assuming that the particles are spheres having the respective diameter Dd. D50 (median diameter) is the equivalent sphere diameter at which the cumulative volume, summed from the smaller equivalent sphere diameters, reaches 50%. D50 may be selected according to the electrode design.

Image analysis software (e.g., ImageJ) can be used in image analysis. In image analysis, the cross-sectional SEM image may be binarized such that the particles of the lithium-metal composite oxide (Fm) are colored black (or white) and the rest is colored white (or black).

In image analysis, elemental analysis of the cross-sectional SEM image may be performed by energy-dispersive X-ray spectroscopy (EDX) or using an electron-probe microanalyzer (EPMA). A mapped image of the lithium-metal composite oxide (Fm) may be acquired from the analytical data. Such a mapped image may be used to derive a volume-based cumulative particle size distribution based on each of arbitrarily selected 100 or more particles (cross sections of particles) of the lithium-metal composite oxide (Fm) for D50 determination.

Since the lithium-metal composite oxide (Fm) is hard and robust, the volume-based cumulative particle size distribution determined from 100 or more particles (cross sections of particles) of the lithium-metal composite oxide (Fm) arbitrarily selected from the cross-sectional SEM image is similar to the volume-based cumulative particle size distribution determined for a lithium-metal composite oxide (Fm) being a raw material powder for electrode use, or the volume-based cumulative particle size distribution determined for a powder of a lithium-metal composite oxide (Fm) separated and recovered from the positive electrode obtained by disassembling a finished battery. The volume-based cumulative particle size distribution of the raw material powder or the powder separated and recovered from the positive electrode can be obtained, for example, by conversion from the volume-based cumulative particle size distribution measured using a laser diffraction/scattering particle size distribution analyzer.

The lithium-metal composite oxide (Fm) may contain an element M that differs from Li and Mn. The element M such as above should be an electropositive element other than hydrogen and may be a metal element (including a so-called semi-metal element). That is, the lithium-metal composite oxide (Fm) can be a lithium-transition metal composite oxide containing at least three metals.

The element M may be, for example, at least one selected from the group consisting of Ti, Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er. The lithium-metal composite oxide (Fm) may contain any two or more elements selected from the above group as the element M.

Even when the lithium-metal composite oxide (Fm) contains the element M, most abundant element other than Li is preferably Mn. The number b of Mn atoms in the lithium-metal composite oxide (Fm) may be the largest among the numbers of metal atoms other than Li in the lithium-metal composite oxide (Fm). The number of Mn atoms may be greater than the total number c of atoms of the metal element(s) other than Li and Mn. A ratio (b/c) of the number b of Mn atoms to the total number c of atoms of the metal element(s) other than Li and Mn in the lithium-metal composite oxide (Fm) is, for example, 1 or more and 15 or less, preferably 1 or more and 12 or less, and may be greater than 1 and 12 or less, or may be 2 or more and 12 or less.

The lithium-metal composite oxide (Fm) desirably contains at least Ti as the element M. A lithium-metal composite oxide (Fm) containing Ti as the element M can exhibit a particularly high capacity. The reason for this is not clear, but it is considered that in part, Ti can exit in the form of Ti⁴⁺ with empty d-orbitals in the lithium-metal composite oxide. In this case, it is considered that a highly symmetric, further stable, and high capacity rock salt type crystal structure is formed. It is also considered that such a rock salt structure is unlikely to be unstable even after repeated charging and discharging.

When the lithium-metal composite oxide (Fm) contains Ti, a ratio Mn/Ti of the number of Mn atoms to the number of Ti atoms in the lithium-metal composite oxide may be 4 or more, 5 or more, or 6 or more, and preferably 7 or more. The ratio Mn/Ti may be 70 or less or 30 or less, and desirably 15 or less.

The lithium-metal composite oxide (Fm) may contain fluorine (F). Fluorine can substitute for oxygen atoms at the anion sites in the above crystal structure. Thus, the crystal structure is stabilized and a higher capacity is obtained even when the lithium-metal composite oxide (Fm) is in a Li-excess state. In addition, the average discharge potential is increased by the substitution of the fluorine atoms. The Li-excess state refers to a state in which the number of Li atoms is larger than the total number of atoms of the metal elements other than Li in the lithium-metal composite oxide (Fm).

In the Li-excess lithium-metal composite oxide (Fm), Li atoms are randomly arranged in the cation sites, and a variety of Li bond states are present. Therefore, the distribution of voltage associated with Li release is wide. For this reason, it may be difficult to utilize the tail portion on the low potential side of the voltage distribution for capacity. However, the introduction of fluorine atoms shifts the distribution of voltage associated with Li release toward the high potential side, which makes it easier to utilize the tail portion for capacity. This further increases available capacity.

The lithium-metal composite oxide (Fm) can be represented by compositional formula LiₐMn_{b}M_{c}O_{d}Fₑ. Here, 1 ≤ a < 1.4, 0.5 ≤ b < 0.9, 0 ≤ c ≤ 0.4, 1.33 ≤ d ≤ 2, 0 ≤ e ≤ 0.67, and 1.7 ≤ d + e ≤ 2.2 are satisfied.

The lithium-metal composite oxide (Fm) containing Ti can be represented by compositional formula LiₐMn_{b}Ti_{c1}M²_{c2}O_{d}Fₑ. Here, M² represents the element M other than Ti, 1 ≤ a ≤ 1.4, 0.3 ≤ b ≤ 0.9, 0 < c1 ≤ 0.5, 0 < c2 ≤ 0.25, 0 ≤ e ≤ 0.7, and 1.7 ≤ d + e ≤ 2 are satisfied. Alternatively, 1 ≤ a ≤ 1.4, 0.5 ≤ b ≤ 0.9, 0.02 < c1 ≤ 0.4, 0 ≤ e ≤ 0.67, and 1.7 ≤ d + e ≤ 2.2 are satisfied. d + e is often 2 or less, may be 1.94 or less, may be 1.9 or less, or may be 1.8 or less.

As shown in the above compositional formulas, some of the oxygen atoms in the anion sites may be substituted with fluorine atoms. This stabilizes the Li-excess state (a > 1) to attain a high capacity. Furthermore, the average discharge potential increases to further increase the available capacity as described above.

A fluorine-free lithium-metal composite oxide (Fm) may be represented by compositional formula LiₐMn_{b}M_{c}O_{d}. Here, 1 ≤ a < 1.4, 0.5 ≤ b < 0.75, 0 ≤ c ≤ 0.35, and 1.6 ≤ d ≤ 2 are satisfied.

Note that the contents of the elements constituting the lithium-metal composite oxide (Fm) can be measured using an inductively coupled plasma emission spectrometer (ICP-AES), an electron prove micro analyzer (EPMA), or an energy-dispersive X-ray spectrometer (EDX), for example.

### (Specific Surface Area)

A Lithium-metal composite oxide (Fm) synthesized by applying a high shear force to a mixed raw material using a stirrer such as a ball mill at the laboratory level has a very large specific surface area. By contrast, a lithium-metal composite oxide (Fm) synthesized by sintering does not have a shear history so intense that a solid-state reaction is induced even if it is in the form of particles or powder obtained by crushing lumpy particles. Therefore, the specific surface area of the lithium-metal composite oxide (Fm) synthesized by sintering is, for example, 0 13 m²/g or more and less than 13 2 m²/g, and may be 6 m²/g to 10 m²/g. When the specific surface area is within any of the above ranges, it is advantageous in that the packing ratio of the lithium-metal composite oxide (Fm) to a positive electrode can be increased and side reactions are likely to be suppressed. When the specific surface area is excessively large, the surface state is unstable and the side reactions can be difficult to suppress.

The specific surface area may be measured using a lithium-metal composite oxide (Fm) as a raw material powder prior to being positive electrode or may be measured using a lithium-metal composite oxide (Fm) separated from a positive electrode. Similar measurement results are obtained in both methods.

Here, the specific surface area of the lithium-metal composite oxide (Fm) is measured after a sample of the lithium-metal composite oxide (Fm) weighing between 0.20 g and 0.25 g is collected, the sample is contained in a measurement cell composed of a glass tube for specific surface area measurement, and the inside of the measurement cell is dried and degassed. Dry and degassing is performed at a pressure of 6.67 Pa and a temperature of 250°C ± 5°C for 1 hour or more. The mass of the sample in the measuring cell is then measured to the nearest 0.1 mg. Then, the nitrogen adsorption amount of the sample at a temperature of -196°C is measured using a specific surface area measuring device. As the measuring device, an automated specific surface area/pore distribution measuring device "Tristar II 3020" manufactured by Shimadzu Corporation is used, for example. From the result of the adsorption amount measurement, the specific surface area of the lithium-metal composite oxide (Fm) is determined by the BET multipoint method at a partial pressure (relative pressure) ranging from 0.001 to 0.2.

### <Method for Producing Lithium-Metal Composite Oxide (Fm)>

No limitation is placed on a method for producing the lithium-metal composite oxide (Fm), but it is desirable to produce the lithium-metal composite oxide (Fm) by sintering a mixed raw material of the elements constituting the lithium-metal composite oxide (Fm). Sintering promotes the growth of crystals similar to those having a rock salt structure belonging to the space group Fm-3m, thereby obtaining a lithium-metal composite oxide having a large crystallite size. Thereafter, the crystallite size may be controlled to a desired range by pulverization.

As the raw material of the elements constituting the lithium-metal composite oxide, an Mn compound, a compound of the element M, a lithium compound, a fluorine compound, a titanium compound, and the like may be arbitrarily selected and used. The types and mixing ratio of the raw material may be appropriately selected according to the desired composition described above.

Examples of the Mn compound include Mn oxides such as MnO₂ and Mn₂O₃, and manganese salts such as lithium manganate. Examples of the compound of the element M include M salts such as an oxide, an acid fluoride, and a hydroxide. Examples of the lithium compound include lithium oxides such as Li₂O and lithium salts such as lithium carbonate (Li₂CO₃), LiOH, and lithium manganate (LiMnO₂). Examples of the fluorine compound include fluorine salts such as lithium fluoride (LiF). Examples of the titanium compound include titanium oxides such as TiO₂ and titanium salts such as lithium titanate.

The sintering atmosphere for the mixed raw material may vary depending on the composition of the lithium-metal composite oxide (Fm) to be obtained and the type of the raw material, and may be, for example, an oxidizing atmosphere (e.g., in air or in the presence of oxygen). It is desirable to circulate the atmosphere gases.

The sintering temperature for the mixed raw material may vary depending on the composition of the lithium-metal composite oxide (Fm) to be obtained and the type of the raw material, and may be, for example, 700°C or higher, and desirably 900°C or higher and 1300°C or lower.

When the lithium-metal composite oxide (Fm) obtained by sintering is lumpy particles, the lumpy particles may be pulverized so as to have a desired aspect ratio or circularity. In such a case, a stirrer capable of applying a large shear force to the particles, such as a ball mill or a bead mill may be used.

There are various methods for controlling the particle shape, and the method is not limited to crushing particles. For example, the mixed raw material may be sintered under stirring. For example, the mixed raw material may be sintered under stirring using a firing furnace equipped with a fluidized bed. Alternatively, particles having a nearly spherical shape may be used as a part of the raw material. For example, a manganese compound or a manganese-titanium composite compound having a nearly spherical shape may be used as the raw material.

The following describes a secondary battery according to an embodiment of the present disclosure in detail. The secondary battery includes the following positive electrode, negative electrode, electrolyte, and separator, for example.

### [Positive Electrode]

The positive electrode includes a positive electrode current collector and a positive electrode mixture layer formed on a surface of the positive electrode current collector and containing a positive electrode active material. As the positive electrode, the above-described positive electrode for secondary batteries is used. The positive electrode mixture layer can be formed by, for example, applying a positive electrode slurry to the surface of the positive electrode current collector, followed by drying. Here, in the positive electrode slurry, a positive electrode mixture containing a positive electrode active material, a binder, and the like is dispersed in a dispersion medium. The applied film after being dried may be rolled as necessary. The positive electrode mixture layer may be formed on one of the surfaces of the positive electrode current collector and may be formed on both surfaces.

The positive electrode mixture layer contains a positive electrode active material as an essential component, and may optionally contain, for example, a binder, a thickener, a conductive agent, and a positive electrode additive. Known materials can be used as the binder, the thickener, and the conductive agent.

The positive electrode active material contains the above-described lithium-metal composite oxide (Fm) having a crystal structure similar to the rock salt structure belonging to the space group Fm-3m. The lithium-metal composite oxide (Fm) is in the form of secondary particles in which a plurality of primary particles are aggregated, for example. The particle diameter of the primary particles is generally from 0.01 µm to 1 µm.

The lithium-metal composite oxide (Fm) may be mixed with another known lithium metal oxide for use as a positive electrode active material. Examples of the other known lithium-metal oxide include lithium-transition metal composite oxides such as LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M represents at least one selected from the group consisting of Na, Mg, Sc, Y, Mn, Fe, Co, Ni, Cu, Zn, Al, Cr, Pb, Sb, and B. Me includes at least a transition element (e.g., including at least one selected from the group consisting of Mn, Fe, Co, and Ni). Here, 0 ≤ a ≤ 1.2, 0 ≤ b ≤ 0.9, 2.0 ≤ c ≤ 2.3. Note that the value "a" indicating the molar ratio of lithium is increases or decreases depending on charging and discharging.

The shape and thickness of the positive electrode current collector can be selected from the shape and range corresponding to those of the negative current collector, respectively. Examples of the material of the positive electrode current collector include stainless steel, aluminum, aluminum alloys, and titanium.

### [Negative Electrode]

The negative electrode includes, for example, a negative electrode current collector, and may include a negative electrode active material layer formed on a surface of the negative electrode current collector. The negative electrode active material layer can be formed by, for example, applying a negative electrode slurry to the surface of the negative electrode current collector, followed by drying. Here, in the negative electrode slurry, a negative electrode mixture containing a negative electrode active material, a binder, and the like is dispersed in a dispersion medium. The applied film after being dried may be rolled as necessary. That is, the negative electrode active material may be a mixture layer. Alternatively, a lithium metal foil or a lithium alloy foil may be attached to the negative electrode current collector. The negative electrode active material layer may be formed on one of the surfaces of the negative electrode current collector or on both surfaces.

The negative electrode active material layer contains a negative electrode active material as an essential component, and may optionally contain, for example, a binder, a conductive agent, and a thickener. Known materials can be used as the binder, the conductive agent, and the thickener.

Examples of the negative electrode active material include materials that electrochemically absorb and release lithium ions, lithium metals, and lithium alloys. Examples of the materials that electrochemically absorb and release lithium ions include carbon materials and alloy-based materials. Examples of the carbon materials include graphite, graphitizable carbon (soft carbon), and non-graphitizable carbon (hard carbon). Among these, graphite, which is excellent in stability during charging and discharging and has small irreversible capacity, is preferable. Examples of the alloy-based materials include those containing at least one metal capable of being alloyed with lithium. For example, a composite material in which a lithium ion conductive phase and silicon phases dispersed in the lithium ion conductive phase may be used.

As the negative electrode current collector, a non-porous conductive substrate (e.g., a metal foil) or a porous conductive substrate (e.g., mesh, net, or a punched sheet) is used. Examples of the material of the negative electrode current collector include stainless steel, nickel, nickel alloys, copper, and copper alloys.

### [Electrolyte]

The electrolyte may be a liquid electrolyte (liquid electrolyte solution), a gel electrolyte, or a solid electrolyte. The liquid electrolyte is an electrolyte solution containing a nonaqueous solvent and a salt dissolved in the nonaqueous solvent, for example. The concentration of the salt in the liquid electrolyte is 0.5 mol/L or more and 2 mol/L or less, for example. The liquid electrolyte may contain a known additive.

The gel electrolyte contains a salt and a matrix polymer, or contains a salt, a nonaqueous solvent, and a matrix polymer. As the matrix polymer, a polymer material that absorbs a nonaqueous solvent to gel is used, for example. Examples of the polymer material include fluorocarbon resins, acrylic resins, polyether resins, and polyethylene oxides.

As the solid electrolyte, a material (e.g., an oxide-based solid electrolyte, a sulfide-based solid electrolyte, or a halide-based solid electrolyte) known in the field of all-solid lithium-ion secondary batteries and the like is used, for example.

For example, a liquid nonaqueous electrolyte is prepared by dissolving a salt in a nonaqueous solvent. The salt is an electrolyte salt that ionically dissociates in an electrolyte, and may include, for example, a lithium salt. The electrolyte may contain various additives. The electrolyte is usually used in a liquid state but may be in the state in which the fluidity may be restricted by a gelling agent or the like.

Examples of the nonaqueous solvent include cyclic carbonic acid esters, chain carbonic acid esters, cyclic carboxylic acid esters, and chain carboxylic acid esters. Examples of the cyclic carbonic acid esters include propylene carbonate (PC), ethylene carbonate (EC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), and ethyl propionate (EP). One nonaqueous solvent may be used alone, or two or more nonaqueous solvents may be used in combination.

Examples of the lithium salt that can be used include lithium salts of chlorine-containing acids (e.g., LiClO₄, LiAlCl₄, and LiB₁₀Cl₁₀), lithium salts of fluorine-containing acids (e.g., LiPF₆, LiPF₂O₂, LiBF₄, LiSbF₆, LiAsF₆, LiCF₃SO₃, and LiCF₃CO₂), lithium salts of fluorine-containing acid imides (e.g., LiN(FSO₂)₂, LiN(CF₃SO₂)₂, LiN(CF₃SO₂)(C₄F₉SO₂), and LiN(C₂F₅SO₂)₂), and lithium halides (e.g., LiCl, LiBr, and LiI). One lithium salt may be used alone, or two or more lithium salts may be used in combination.

The concentration of the lithium salt in the electrolyte may be 1 mol/liter or more and 2 mol/liter or less, or may be 1 mol/liter or more and 1.5 mol/liter or less. An electrolyte having excellent ionic conductivity and an appropriate viscosity can be obtained by controlling the concentration of the lithium salt within the above-described range. However, the concentration of the lithium salt is not limited to the above.

### [Separator]

The separator is provided between the positive electrode and the negative electrode. The separator is excellent in ion permeability and has appropriate mechanical strength and insulating properties. As the separator, a microporous thin film, a woven fabric, or a nonwoven fabric can be used, for example. Preferable examples of the material of the separator include polyolefins such as polypropylene and polyethylene.

One example of the configuration of the secondary battery is a configuration in which an electrode group formed by winding the positive electrode and the negative electrode with the separator therebetween and the nonaqueous electrolyte are housed in an outer housing. Alternatively, an electrode group of another type other than the wound type may be applied, such as an electrode group of stacked type formed by stacking the positive electrode and the negative electrode with the separator therebetween. The secondary battery may be in any form, such as cylindrical, prismatic, coin-shaped, button-shaped, or laminated.

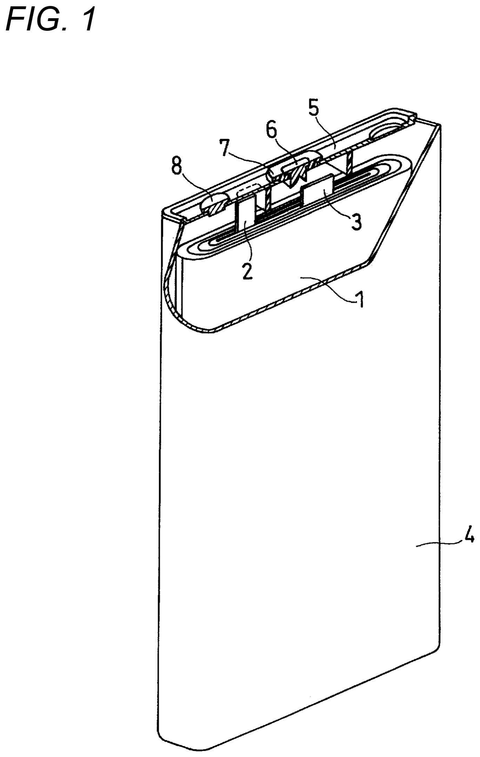

FIG. 1 is a partial cutaway schematic perspective view of a prismatic secondary battery according to an embodiment of the present disclosure.

The battery includes a bottomed prismatic battery case 4, and an electrode group 1 and a nonaqueous electrolyte (not illustrated) housed within the battery case 4. The electrode group 1 has a long band-shaped negative electrode, a long band-shaped positive electrode, and a separator provided therebetween. The negative electrode current collector of the negative electrode is electrically connected to a negative electrode terminal 6 provided at a sealing plate 5 via a negative electrode lead 3. The negative electrode terminal 6 is insulated from the sealing plate 5 by a resin-made gasket 7. The positive electrode current collector of the positive electrode is electrically connected to the back surface of the sealing plate 5 via a positive electrode lead 2. That is, the positive electrode is electrically connected to the battery case 4 which also serves as a positive electrode terminal. The periphery of the sealing plate 5 fits to the opening end of the battery case 4 and the fitting part is laser welded. The sealing plate 5 has a nonaqueous electrolyte injection hole, which is blocked by a sealing plug 8 after the injection.

Note that the secondary battery may have configuration including a metal-made battery case having, for example, a cylindrical shape, a coin shape, or a button shape, or may be a laminated battery including a battery case made of a laminated sheet that is a laminate of a barrier layer and a resin sheet. In the present disclosure, the types, shapes, and the like of the secondary battery are not particularly limited.

### (Supplemental Remarks)

According to the above description of the embodiments, the following techniques are disclosed.

### (Technique 1)

A positive electrode active material for secondary batteries including a lithium-metal composite oxide having a rock salt type crystal structure assignable to a space group Fm-3m,
wherein the lithium-metal composite oxide contains at least Li and Mn, and
the lithium-metal composite oxide has a D50 of 0.05 µm or more and 10 µm or less in a volume-based cumulative particle size distribution.

### (Technique 2)

The positive electrode active material for secondary batteries according to Technique 1, wherein a ratio b/c of a number b of Mn atoms to a number c of atoms of a metal element other than Li and Mn in the lithium-metal composite oxide is 1 or more and 15 or less.

### (Technique 3)

The positive electrode active material for secondary batteries according to Technique 1 or 2, wherein the lithium-metal composite oxide contains fluorine.

### (Technique 4)

The positive electrode active material for secondary batteries according to any one of Techniques 1 to 3, wherein the lithium-metal composite oxide is represented by a composition formula LiₐMn_{b}M_{c}O_{d}Fₑ, and
M includes at least one element other than Li and Mn, and
1 ≤ a < 1.4, 0.5 ≤ b < 0.9, 0 ≤ c ≤ 0.4, 1.33 ≤ d ≤ 2, 0 ≤ e ≤ 0.67, and 1.7 ≤ d + e ≤ 2 are satisfied.

### (Technique 5)

The positive electrode active material for secondary batteries according to Technique 4, wherein the lithium-metal composite oxide contains at least Ti as the M.

### (Technique 6)

The positive electrode active material for secondary batteries according to Technique 4 or 5, wherein the M includes at least one selected from the group consisting of Ti, Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

### (Technique 7)

The positive electrode active material for secondary batteries according to Techniques 1 to 6, wherein a D90 of the lithium-metal composite oxide in the volume-based cumulative particle size distribution is 1 µm or more and 10 µm or less.

### (Technique 8)

A secondary battery including
a positive electrode; a negative electrode; an electrolyte; and a separator provided between the positive electrode and the negative electrode,
wherein the positive electrode contains the positive electrode active material for secondary batteries according to any one of Techniques 1 to 7.

Hereinafter, the present disclosure will be specifically described based on examples and comparative examples, but the present disclosure is not limited to the following examples.

### <Examples 1 to 10>

### [Positive Electrode Production]

A mixed raw material containing manganese oxide (Mn₂O₃), lithium carbonate (Li₂CO₃), and titanium oxide (TiO₂) were sintered at 950°C for 10 hours to obtain lumpy particles of a Li-excess lithium-metal composite oxide (Fm) represented by LiₐMn_{b}M_{c}O_{d} (where 1 < a < 1.4, 0.5 ≤ b < 0.75, 0.1 < c ≤ 0.4, and 1.6 ≤ d ≤ 2 were satisfied). The composition was identified by analyzing the lithium-metal composite oxide (Fm) by ICP emission spectrometry.

The resulting lithium-metal composite oxide (Fm) in the form of lumpy particles was pulverized using a planetary ball mill under various conditions to obtain lithium-metal composite oxides (Fm) having different average particle diameters D50.

In Example 1, the lithium-metal composite oxide (Fm) in the form of lumpy particles was charged into a planetary ball mill (Premium-Line P7 manufactured by Fritsch, rotational speed: 300 rpm, vessel: 45 mL, balls: 3 mm diameter ZrO₂ balls) and treated in an air atmosphere at room temperature for 1 hour. In Examples 2 to 6, the time for treatment using the ball milling was changed from 1 hour in Example 1 to 2, 3, 6, 12, and 24 hours, respectively.

In Examples 7 to 10, the rotation speed of the planetary ball mill was changed to 150 rpm. The ball milling time was set to 3 hours for Example 7, 6 hours for Example 8, 12 hours for Example 9, and 24 hours for Example 10.

For each of the lithium-metal composite oxides (Fm) after the pulverization, the particle size distribution was measured using a laser diffraction/scattering particle size analyzer to determine the average particle diameter D50 and the particle diameter D90, at which the cumulative particle volume reaches 50% and 90%, respectively. An aqueous solution of sodium hexametaphosphate was used as a dispersion medium.

Furthermore, X-ray diffraction (XRD) pattern measurement and analysis were performed on the lithium-metal composite oxides (Fm) after the pulverization. It was confirmed from the numbers and peak positions of XRD peaks that they had the rock salt type crystal structure attributable to the space group Fm-3m.

As a result of element analysis by ICP-AES, the composition of the lithium-metal composite oxide (Fm) of each of Examples 1 to 10 was identified as Li_{1.21}Mn_{0.61}Ti_{0.175}O_{1.78}.

A positive electrode slurry was prepared by mixing the resulting lithium-metal composite oxide (Fm), acetylene black, and polyvinylidene fluoride in a solid mass ratio of 7:2:1 with N-methyl-2-pyrrolidone (NMP) as a dispersion medium. Next, the positive electrode slurry was applied to a positive electrode current collector formed of an aluminum foil, and the applied film was dried, compressed, and then cut to a predetermined electrode size to obtain a positive electrode.

### [Electrolyte Preparation]

A nonaqueous electrolyte was prepared by adding LiPF₆ as a lithium salt to a mixed solvent obtained by mixing ethylene carbonate (EC), ethyl methyl carbonate (EMC), and dimethyl carbonate (DMC) in a predetermined volume ratio.

### [Test Cell Production]

A test cell was produced using one of the positive electrodes described above and a counter negative electrode formed of a lithium metal foil. The positive electrode and the counter negative electrode were arranged to face each other with a separator therebetween to form an electrode body. The electrode body was housed in a coin-shaped outer can. After the electrolyte was injected into the outer can, the outer can was sealed to obtain a coin-shaped test secondary battery.

### [Evaluation]

### (Discharge Capacity)

Each of the secondary batteries was charged at a constant current of 0.1 C in a normal temperature environment until the battery voltage reached 4.95 V, and further charged at a constant voltage of 4.95 V until the current reached 0.01 C. Thereafter, 20-minute pause was taken, and a constant current discharge was performed at a constant current of 0.1 C until the battery voltage reached 2.5 V The discharge capacity at that point was measured. A discharge capacity C₁ (mAh/g) per mass of the lithium-metal composite oxide (Fm) was evaluated.

### <Comparative Example 1>

In the positive electrode production, Li₂MnO₄ having a spinel structure with an average particle diameter D50 of 15 to 17 µm was prepared as a positive electrode active material. A positive electrode slurry was prepared by mixing the prepared positive electrode active material, acetylene black, and polyvinylidene fluoride in a solid mass ratio of 7:2:1 with N-methyl-2-pyrrolidone (NMP) as a dispersion medium.

Except for the above, a positive electrode was produced in the same manner as Example 1, and a secondary battery was obtained. The obtained secondary battery was evaluated in the same manner as Example 1.

### <Comparative Example 2>

A lithium-metal composite oxide (Fm) in the form of powder was obtained in a manner that the lithium-metal composite oxide (Fm) in the form of lumpy particles was ground in an agate mortar, instead of the pulverization using a planetary ball mill, and then sieved through a 75-µm sieve in the positive electrode production. In the same manner as Example 1, the average particle diameter D50 of the powder of the obtained lithium-metal composite oxide (Fm) was measured. In addition, XRD measurement and ICP-AES analysis confirmed that the resulting lithium-metal composite oxide (Fm) had a composition of Li_{1.21}Mn_{0.61}Ti_{0.175}O_{1.78} and had a rock salt type crystal structure assignable to the space group Fm-3m.

The prepared lithium-metal composite oxide (Fm) in the form of powder was mixed with acetylene black and polyvinylidene fluoride in a solid mass ratio of 7:2:1 using N-methyl-2-pyrrolidone (NMP) as a dispersion medium to prepare a positive electrode slurry.

Except for the above, a positive electrode was prepared in the same manner as Example 1, and a secondary battery was obtained. The obtained secondary battery was evaluated in the same manner as Example 1.

### <Comparative Example 3>

In the positive electrode production, titanium oxide (TiO₂), lithium oxide (Li₂O), and lithium manganate (LiMnO₂) were mixed at a predetermined mass ratio. The resulting powder mixture was charged into a planetary ball mill (Premium-Line P7 manufactured by Fritsch, rotational speed: 600 rpm, vessel: 45 mL, balls: 5 mm diameter Zr balls) and treated in an Ar atmosphere at room temperature for 35 hours (35 cycles of 1-hour operation followed by a 10-minute pause) to obtain a Li transition metal composite oxide (Fm) represented by composition formula Li_{1.2}MR_{0.6}Ti_{0.1}O₂.

In the same manner as Example 1, the average particle diameter D50 and D90 of the obtained lithium composite oxide (Fm) in the form of powder were measured. The average particle diameter D50 was 0.83 µm and D90 was 20 µm. In addition, as a result of measurement and analysis of the X-ray diffraction pattern, it was confirmed that the obtained lithium composite oxide (Fm) had a rock salt type crystal structure assignable to the space group Fm-3m.

The evaluation results are shown in Table 1. Table 1 shows, for each of the secondary batteries, the value of the discharge capacity C₁ and the values of the corresponding average particle diameters D50 and D90 of the positive electrode active material (lithium-metal composite oxide

(Fm)) used. In Table 1, A1 to A10 corresponds to Examples 1 to 10, respectively, and B1 and B2 correspond to Comparative Examples 1 and 2, respectively.

**[Table 1]**

| Secondary battery | Positive electrode active material | Average particle diameter D50 (µm) | Particle diameter D90 (µm) | Discharge capacity C₁ (mAh/g) |
|---|---|---|---|---|
| A1 | Li_{1.21}Mn_{0.61}Ti_{0.175}O_{1.78} | 0.13 | 4.57 | 208 |
| A2 | Li_{1.21}Mn_{0.61}Ti_{0.175}O_{1.78} | 0.15 | 5.30 | 230 |
| A3 | Li_{1.21}Mn_{0.61}Ti_{0.175}O_{1.78} | 0.18 | 6.17 | 242 |
| A4 | Li_{1.21}Mn_{0.61}Ti_{0.175}O_{1.78} | 0.11 | 4.13 | 257 |
| A5 | Li_{1.21}Mn_{0.61}Ti_{0.175}O_{1.78} | 0.10 | 3.36 | 263 |
| A6 | Li_{1.21}Mn_{0.61}Ti_{0.175}O_{1.78} | 0.15 | 6.71 | 296 |
| A7 | Li_{1.21}Mn_{0.61}Ti_{0.175}O_{1.78} | 0.60 | 3.46 | 193 |
| A8 | Li_{1.21}Mn_{0.61}Ti_{0.175}O_{1.78} | 0.24 | 2.92 | 201 |
| A9 | Li_{1.21}Mn_{0.61}Ti_{0.175}O_{1.78} | 0.19 | 7.14 | 208 |
| A10 | Li_{1.21}Mn_{0.61}Ti_{0.175}O_{1.78} | 0.14 | 2.61 | 210 |
| B1 | Li₂MnO₄ | 15 to 17 | 16 to 20 | 110 |
| B2 | Li_{1.21}Mn_{0.61}Ti_{0.175}O_{1.78} | 62 | 95 | 124 |

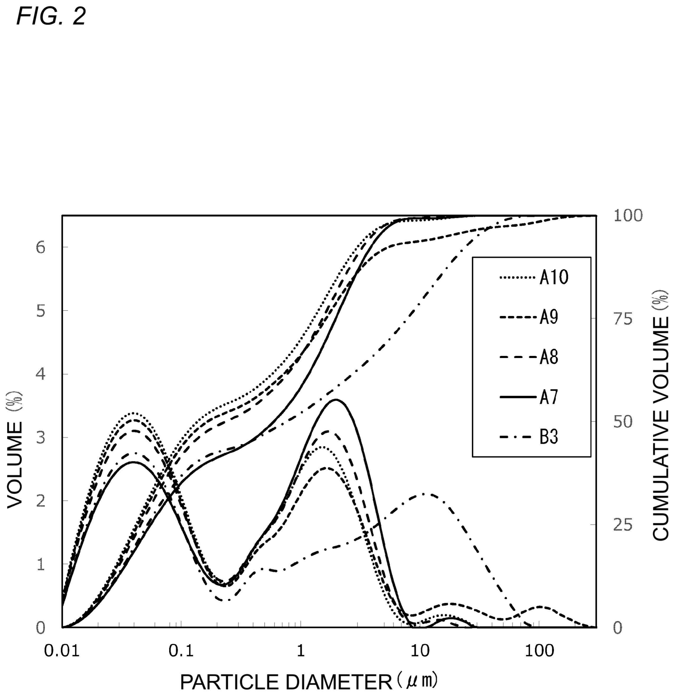

FIG. 2 shows the volume-based particle size distributions and cumulative particle size distributions of the lithium-metal composite oxides (Fm) synthesized in Examples 7 to 10 and Comparative Example 3. In FIG. 2, B3 corresponds to a comparative example. As shown in FIG. 2, the lithium-metal composite oxide of Comparative Example 3 (B3) synthesized by ball milling instead of sintering of the mixed raw material had a particle size distribution that extended beyond 10 µm and spanned a broad range. Consequently, D90 was greater than those of the lithium-metal composite oxides of Examples 1 to 10 synthesized by sintering.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

According to the positive electrode active material for secondary batteries according to the present disclosure, a high-energy density secondary battery can be provided. The secondary battery according to the present disclosure is useful for a main power source of a mobile communication device, a portable electronic device, or the like.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A positive electrode active material for secondary batteries comprising
a lithium-metal composite oxide having a rock salt type crystal structure assignable to a space group Fm-3m, wherein
the lithium-metal composite oxide contains at least Li and Mn, and
the lithium-metal composite oxide has a D50 of 0.05 µm or more and 10 µm or less in a volume-based cumulative particle size distribution.

2. The positive electrode active material for secondary batteries according to claim 1,
wherein a ratio b/c of a number b of Mn atoms to a number c of atoms of a metal element other than Li and Mn in the lithium-metal composite oxide is 1 or more and 15 or less.

3. The positive electrode active material for secondary batteries according to claim 1,
wherein the lithium-metal composite oxide contains fluorine.

4. The positive electrode active material for secondary batteries according to claim 1,
wherein the lithium-metal composite oxide is represented by a composition formula LiₐMn_{b}M_{c}O_{d}Fₑ, and
M includes at least one element other than Li and Mn, and
1 ≤ a < 1.4, 0.5 ≤ b < 0.9, 0 ≤ c ≤ 0.4, 1.33 ≤ d ≤ 2, 0 ≤ e ≤ 0.67, and 1.7 ≤ d + e ≤ 2 are satisfied.

5. The positive electrode active material for secondary batteries according to claim 4,
wherein the lithium-metal composite oxide contains at least Ti as the M.

6. The positive electrode active material for secondary batteries according to claim 4,
wherein the M includes at least one selected from the group consisting of Ti, Fe, Ge, Si, Ga, Ni, Co, Sn, Cu, Nb, Mo, Bi, V, Cr, Y, Zr, Zn, Na, K, Ca, Mg, Pt, Au, Ag, Ru, Ta, W, La, Ce, Pr, Gd, Sm, Eu, Yb, Dy, Al, and Er.

7. The positive active material for secondary batteries according to any one of claims 1 to 6,
wherein a D90 of the lithium-metal composite oxide in the volume-based cumulative particle size distribution is 1 µm or more and 10 µm or less.

8. A secondary battery comprising:
a positive electrode; a negative electrode; an electrolyte; and a separator provided between the positive electrode and the negative electrode,
wherein the positive electrode contains the positive electrode active material for secondary batteries according to any one of claims 1 to 6.
